Europäisches Patentamt

European Patent Office

Office européen des brevets

(11) Veröffentlichungsnummer: **0 191 329 B1**

# EUROPÄISCHE PATENTSCHRIFT

(45) Veröffentlichungstag der Patentschrift: **25.11.92**

(21) Anmeldenummer: **86100836.5**

(22) Anmeldetag: **22.01.86**

Die Akte enthält technische Angaben, die nach dem Eingang der Anmeldung eingereicht wurden und die nicht in dieser Patentschrift enthalten sind.

(51) Int. Cl.⁵: **G05B 11/00**, G05D 23/19, H05B 1/02

(54) **Einrichtung für einstellbare Eingabevorrichtungen für elektrische oder elektronische Steuergeräte, insbesondere für Elektrospeicherheizanlagen.**

(30) Priorität: **13.02.85 DE 3504900**

(43) Veröffentlichungstag der Anmeldung:
**20.08.86 Patentblatt 86/34**

(45) Bekanntmachung des Hinweises auf die Patenterteilung:
**25.11.92 Patentblatt 92/48**

(84) Benannte Vertragsstaaten:
**CH FR GB LI SE**

(56) Entgegenhaltungen:
**EP-A- 0 025 476       EP-A- 0 069 046**
**EP-A- 0 113 077       EP-A- 0 155 385**
**DE-A- 1 523 298       GB-A- 2 181 274**

(73) Patentinhaber: **Stiebel Eltron Elektronik GmbH & Co. KG**
**Bessemerstrasse 23-29**
**W-1000 Berlin 42(DE)**

(72) Erfinder: **Vollmer, Hans**
**Winterbergstrasse**
**W-7742 St. Georgen(DE)**
Erfinder: **Kammerer, Gerd**
**Schiltachweg**
**W-7742 St. Georgen(DE)**

(74) Vertreter: **Thoma, Friedrich, Dipl.-Ing.(FH)**
**Buchenstrasse 20**
**W-7612 Haslach i.K.(DE)**

**Beschreibung**

Die Erfindung betrifft ein Verfahren und eine Einrichtung zur Eingabe und Anzeige eines bestimmten elektrischen Steuersignalsollwertes eines elektrischen oder elektronischen Steuergerätes, bei dem mit einem stufenlos veränderlichen Widerstand ein Steuersignal in einen Mikroprozessor eingegeben wird, der unmittelbar an einer Skala und/oder mittelbar an einem digitalen Ziffernanzeigemodul ablesbar ist, insbesondere für Steuergeräte von Elektrospeicherheizanlagen.

Bei einer Vielzahl derartiger Eingabeeinrichtungen wird aus Kostengründen davon ausgegangen, diese mit Mitteln auszustatten, die es ermöglichen, die Steuersignalwerte technisch einfach einzugeben und den eingelesenen Wert präzise anzuzeigen.

Aus der EP-A-0 069 046 ist ein elektronisches Gerät mit Einrichtungen zur Einstellung der Regelparameter bekannt, das mit einer analogen Anzeigevorrichtung für Ist- und Sollwert, mit Bedienungselementen auf seiner Frontplatte, mit einer weiteren analogen Anzeigevorrichtung und mit einem mittels einer Blende betätigbaren Umschalters versehen ist.

Bei diesem Gerät sind auf der Frontplatte neben ersten Bedienungselementen zur inkrementellen Einstellung von Handstellwerten vorhanden, die der weiteren Anzeigevorrichtung zugeordnet sind. Auf der Frontplatte befindet sich ein weiterer Skalenteil der weiteren Anzeigevorrichtung zur Anzeige der jeweils angewählten Einrichtung. Diese Einrichtung ist bei digitalen Rechnern anwendbar und ist für Eingabevorrichtungen für Steuergeräte von Elektrospeicherheizanlagen technisch zu aufwendig, ungeeignet und zu teuer.

Aus der EP-A-0 155 385 ist eine mikroprozessorgesteuerte Anzeigeeinrichtung für einen Wert aus zwei Wertegruppen bekannt, wobei eine erste Wertegruppe (A) für den Bediener und eine zweite Wertegruppe (B) nur für die Inbetriebnahme und Wartung für einen Fachmann relevant ist. Dabei werden durch Fortschaltung der Anzeige die Werte nacheinander in einer Schleife mit fester Reihenfolge angezeigt. Im Normalbetrieb werden nur Werte aus der ersten Wertegruppe und nach Vorliegen eines bestimmten Bedienungskriteriums auch Werte aus der zweiten Wertegruppe angezeigt. Damit wird der Benutzer nicht durch die Anzeige von ihn nicht interessierenden Werten verwirrt und er kann die für ihn wichtigen Werte wesentlich schneller anwählen.

Auch diese Anzeigeeinheit ist technisch aufwendig und teuer und zur Eingabe von Steuersignalwerten in Steuergeräte von Elektrospeicherheizanlagen ungeeignet.

Aus der EP-A-0 113 077 ist eine Klimaanlage mit einer einstellbaren Eingabevorrichtung für Steuersignalwerte in das elektronische Steuergerät bekannt. Dort werden die Steuersignalwerte in einem abgestuften Spannungsteiler erzeugt und mittels eines Drehschalters in einen Mikrokomputer eingespeist. Dieser gibt die eingespeisten Werte an eine abgestufte, optoektronische Anzeigevorrichtung weiter.

Die Eingabe der Steuersignalwerte ist dort zwar relativ feinstufig, wie auch die dortige optoelektronische Anzeige. Es ist dort jedoch nicht erkennbar, ob der eingegebene Steuersignalwert und dessen Temperaturanzeige der tatsächlichen Sollwerttemperatur entspricht, sodaß auch diese Einrichtung für den gedachten Zweck völlig ungeeignet ist.

Der Erfindung liegt die Aufgabe zugrunde, die Nachteile der bekannten Einrichtungen zu vermeiden und eine einstellbare Eingabevorrichtung der eingangsgenannten Art zu schaffen, die eine Eingabe von Steuersignalwerten (A) und eine Anzeige eines bestimmten Steuersignalsollwertes ($B_s$) mit technisch einfachen und wirtschaftlichen Mitteln ermöglicht und deren eingegebener Steuersignalwert (A) genau als der Steuersignalsollwert ($B_s$) angezeigt und abgelesen werden kann.

Diese Aufgabe wird erfindungsgemäß mit den Merkmalen im kennzeichnenden Teil der Patentansprüche 1 und 2 gelöst und in den Unteransprüchen sind weitere vorteilhafte Einzelheiten beansprucht.

Der jeweilige, in das Steuergerät einzugebende Steuersignalreferenzwert ($B_1$, $B_2$, ...$B_n$), einschließlich des Steuersignalsollwertes ($B_s$) wird in der Einrichtung mit einem elektronischen Zähler, einem Operationsverstärker, einem Dekoder oder mit einer Diodenmatrix gewonnen.

In bestimmten Ausführungen der Einrichtung ist es vorgesehen, daß die Eingabe des Steuersignalwertes (A) dazu benutzt wird, einige der zuvor erwähnten elektronischen Hilfsmittel zu starten, zur Bildung eines entsprechenden Referenzsignalwertes ($B_1$, $B_2$, ...$B_n$) und eines darin eingeschlossenen Steuersignalsollwertes ($B_s$). Für bestimmte Anwendungsfälle ist der Einsatz eines Mikroprozessors, insbesondere bei relativ feinstufigen Mittenanzeige, aus wirtschaftlichen Gründen vorteilhaft.

Zweckmäßigerweise werden die einzelnen Steuersignalreferenzwerte, einschließlich des Steuersignalsollwertes von einem elektronischen Zähler erzeugt, der auf die jeweiligen Referenzwerte programmiert ist. Dabei ist der Start des Zählers mit der technisch einfachen Steuersignaleingabevorrichtunggekoppelt.

Vorteilhaft bei dieser Einrichtung ist nicht nur die Verwendbarkeit relativ ungenauer, analoger Eingabevorrichtungen inform von Drehwiderständen, sondern auch die Verwendung von digitalen Ziffernanzeigemodulen mit wenig Anzeigestellen. Dabei kann die Anzeige der Sollwertmitte vom Dekoder der Ziffernanzeige gesteuert sein, wobei dort ein spezielles, im Kontrast gesteuertes optoelektronisches Anzeigesegment geschaltet wird.

Vorteilhaft ist ferner die einfache Bedienung und genaue Ablesung dieser Eingabe- und Anzeigeeinrichtung eines Steuersignalwertes (A), bzw. Steuersignalsollwertes ($B_s$).

Es liegt im Rahmen der Erfindung, daß anstelle einer analogen, mittels eines Drehwiderstandes bewirkten Eingabe eines Steuersignalwertes (A), auch eine digitale, mittels eines Impulsgebers bewirkte Eingabe eines Steuersignalwertes (A) vorgesehen ist. In diesem Falle wird ein zuvor beschriebener Zähler zur Bildung des jeweiligen Steuersignalreferenzwertes ($B_s$) für den Steuersignalwert (A) unmittelbar angesteuert.

## Patentansprüche

1. Verfahren zur Eingabe und Anzeige eines bestimmten elektrischen Steuersignalsollwertes ($B_s$) eines elektrischen oder elektronischen Steuergerätes, bei dem ein Steuersignalwert (A) eingegeben wird, der an einer Skala einer Eingabe- und Anzeigevorrichtung und/oder mittelbar an einem digitalen Ziffernanzeigemodul ablesbar ist, **dadurch gekennzeichnet**, daß eine Mehrzahl von Steuersignalreferenzwerten ($B_1$, $B_2$ ...$B_n$), einschließlich des Steuersignalsollwertes ($B_s$) bereitgestellt werden, daß der Steuersignalwert (A) eingelesen wird und mit den Steuersignalreferenzwerten ($B_1$, $B_2$, $B_s$..$B_n$) verglichen wird, und daß bei Übereinstimmung des Steuersignalwertes (A) mit dem Steuersignalsollwert ($B_s$), dieser Steuersignalsollwert ($B_s$) optisch oder akustisch angezeigt wird.

2. Einrichtung zur Eingabe und Anzeige eines bestimmten elektrischen Steuersignalsollwertes ($B_s$), mit einem stufenlos veränderlichen Widerstand zur Eingabe eines Steuersignalwertes (A) in einen Mikroprozessor und mit einer optoelektronischen Eingabe- und Anzeigevorrichtung für den eingelesenen Steuersignalwert (A) insbesondere für Steuergeräte von Elektrospeicherheizanlagen, **dadurch gekennzeichnet**, daß eine Mehrzahl von Steuersignalreferenzwerten ($B_1$, $B_2$,..$B_n$), einschließlich des Steuersignalsollwertes ($B_s$) in einem, auf die einzelnen Steuersignalreferenzwerte ($B_1$, $B_2$, $B_s$...$B_n$) programmierten elektronischen Zähler gebildet sind, daß der Start des Zählers mit der Eingabe des Steuersignalwertes (A) ausgelöst wird, daß durch die Eingabe des Steuersignalwertes (A) der Steuersignalsollwert ($B_s$) in einem Vergleicher gelesen wird und daß bei Übereinstimmung des Steuersignalwertes (A) mit dem Steuersignalsollwert ($B_s$) eine optische Mittenanzeige betätigt wird.

3. Einrichtung nach Anspruch 2, dadurch gekennzeichnet, daß die optische Mittenanzeige vom Dekoder der optoelektronischen Eingabe- und Anzeigevorrichtung gesteuert wird, und daß die Mittenanzeige unmittelbar ein Bestandteil der optoelektronischen Eingabe- und Anzeigevorrichtung, insbesondere ein im Kontrast gesteuertes Anzeigesegment ist.

4. Einrichtung nach Anspruch 2, dadurch gekennzeichnet, daß die optische Mittenanzeige räumlich im Bereich einer Skala für die Eingabe des Steuersignalwertes (A) angeordnet ist.

5. Einrichtung nach Anspruch 4, dadurch gekennzeichnet, daß bei einer Skala, pro Skaleneinteilungssegment je eine optische Mittenanzeige vorgesehen ist.

6. Einrichtung nach einem der Ansprüche 2 bis 5, dadurch gekennzeichnet, daß die optische Mittenanzeige mindestens zweistufig, für eine Trendanzeige des Steuersignalwertes (A) nach oben oder unten, ausgebildet ist.

7. Einrichtung nach den Ansprüchen 2 bis 6, dadurch gekennzeichnet, daß der Vergleicher als Differenzverstärker ausgebildet ist.

## Claims

1. A process for the input and display of a specific electrical control signal theoretical value ($B_s$) of an electrical or electronic control device, wherein a control signal value (A) is input which can be read on a scale of an input and display device and/or can be read indirectly on a digital numerical display module, characterised in that a plurality of control signal reference values ($B_1$, $B_2$...$B_n$), including the control signal theoretical value ($B_s$), are made available, that the control signal value (A) is input and compared with the control signal reference values ($B_1$, $B_2$, $B_s$...$B_n$), and that in the event of identity between the control signal value (A) and the control signal theoretical value ($B_s$) this control signal theoretical value ($B_s$) is optically or acoustically displayed.

2. A device for the input and display of a specific electrical control signal theoretical value ($B_s$) comprising a steplessly variable resistor for the input of a control signal value (A) into a microprocessor and comprising an opto-electronic input and display device for the input control signal value (A), in particular for control devices of electric storage heater installations, characterised in that a plurality of control signal reference values ($B_1$, $B_2$...$B_n$), including the control signal theoretical value ($B_s$), are formed in an electronic counter programmed in accordance with the individual control signal reference values ($B_1$, $B_2$, $B_s$...$B_n$), that the start of the counter is triggered by the input of the control signal value (A), that as a result of the input of the control signal value (A) the control signal theoretical value ($B_s$) is read in a comparator, and that in the event of the identity of the control signal value (A) and the control signal theoretical theoretical value ($B_s$) an optical centre display is actuated.

3. A device as claimed in Claim 2, characterised in that the optical centre display is controlled by the decoder of the opto-electronic input and display device and that the centre display directly forms a part of the opto-electronic input and display device, in particular a display segment controlled in contrast.

4. A device as claimed in Claim 2, characterised in that the optical centre display is disposed in the region of a scale for the input of the control signal value (A).

5. A device as claimed in Claim 4, characterised in that in the case of a scale a respective optical centre display is provided for each scale division segment.

6. A device as claimed in one of Claims 2 to 5, characterised in that the optical centre display comprises at least two stages for an upwards or downwards trend display of the control signal value (A).

7. A device as claimed in Claims 2 to 6, characterised in that the comparator has the form of a differential amplifier.

**Revendications**

1. Procédé pour introduire et afficher une valeur de consigne d'un signal de commande électrique déterminé ($B_s$) d'un appareil de commande électrique ou électronique, selon lequel on introduit une valeur (A) d'un signal de commande qui est lisible sur une échelle d'un dispositif d'entrée et d'indication et/ou directement sur un module d'indication numérique, caractérisé par la mise à disposition d'une pluralité de valeurs de référence ($B_1$, $B_2$... $B_n$)

de signaux de commande, y compris la valeur de consigne ($B_s$), par le fait qu'une valeur (A) d'un signal de commande est introduite et comparée avec les valeurs de référence ($B_1$, $B_2$, $B_s$...$B_n$) et par le fait qu'en cas de coïncidence entre la valeur (A) et la valeur de consigne ($B_s$), cette dernière valeur de consigne ($B_s$) fait l'objet d'une indication optique et acoustique.

2. Dispositif pour l'introduction et l'indication d'une valeur de consigne ($B_s$) d'un signal de commande élecrtrique déterminé, comportant une résistance réglable progressivement pour l'introduction d'une valeur (A) d'un signal de commande dans un microprocesseur et comportant un dispositif opto-électronique d'introduction et d'indication de la valeur (A) du signal de commande introduit, destiné en particulier pour des appareils de commande d'installations de chauffage à accumulation électrique, caractérisé par le fait qu'une pluralité de valeurs de référence de signaux de commande ($B_1$, $B_2$... $B_n$), y compris la valeur de consigne ($B_s$), sont formées dans un compteur électronique programmé selon les différentes valeurs de référence ($B_1$, $B_2$, $B_s$..$B_n$), par le fait que le démarrage du compteur est déclenché par l'introduction de la valeur (A) du signal de commande, par le fait que l'introduction de la valeur (A) a pour effet la lecture dans un comparateur de la valeur de consigne ($B_s$) et par le fait qu'en cas de coïncidence entre la valeur (A) et la valeur de consigne ($B_s$) se déclenche une indication de moyenne optique.

3. Dispositif selon la revendication 2, caractérisé par le fait que l'indication optique de moyenne est commandée par le décodeur du dispositif opto-électronique d'introduction et d'indication et par le fait que ladite indication de moyenne est un constituant direct du dispositif opto-électronique d'introduction et d'indication, en particulier un segment d'indication à régulation du contraste.

4. Dispositif selon la revendication 2, caractérisé par le fait que l'indication optique de moyenne est disposée spatialement au voisinage d'une échelle destinée à l'introduction de la valeur (A) du signal de commande.

5. Dispositif selon la revendication 1, caractérisé par le fait que, sur une échelle, est prévue une indication de moyenne optique pour chaque segment de division de l'échelle.

6. Dispositif selon l'une des revendications 2 à 5, caractérisé par le fait que l'indication optique de moyenne est réalisée de manière à comporter au moins deux allures, permettant d'indiquer si la valeur (A) du signal de commande a tendance à se diriger vers le haut ou vers le bas.

7. Dispositif selon les revendications 2 à 6, caractérisé par le fait que le comparateur est réalisé sous la forme d'un amplificateur des différences.